# EUROPÄISCHE PATENTSCHRIFT

(11) **EP 0 425 905 B1**
(45) Veröffentlichungstag und Bekanntmachung des Hinweises auf die Patenterteilung: **27.07.1994**
(21) Anmeldenummer: 90119967.9
(22) Anmeldetag: 18.10.1990
(51) Int. Cl.: H02G 7/05

(54) **Tragspiralenklemme für Leiterseile**
Holding spiral clamp for conductor cables
Pince à spirale de support pour câbles conducteurs

(30) Priorität: 30.10.1989 DE 3936104
(43) Veröffentlichungstag der Anmeldung: 08.05.1991
(73) Patentinhaber: GEORG FISCHER AKTIENGESELLSCHAFT, CH-8201 Schaffhausen (CH)
(72) Erfinder: Roth, Adolf, CH-8211 Stetten (CH)

(56) Entgegenhaltungen:
- CH-A- 477 773
- DE-B- 2 300 672
- DE-C- 2 810 700
- US-A- 4 568 794

## Beschreibung

Die Erfindung betrifft eine Tragspiralenklemme für Leiterseile bei elektrischen Freileitungen, wie sie im Oberbegriff von Anspruch 1 beschrieben ist.

Durch die DE-C2-28 10 700 ist eine Tragspiralenklemme bekanntgeworden, bei welcher die Tragspirale auf die ganze Länge und im Aufhängebereich direkt auf dem Leiterseil mittels einer Klemmvorrichtung festgeklemmt wird. Die Tragspirale dient als Leiterverstärkung im Tragpunkt, wobei das so verstärkte Tragseil durch die Klemme umfasst wird. Nachteilig ist die direkte Auflage der Tragspirale auf dem Leiterseil im Klemmbereich, wobei durch zu hohe Klemmkräfte Quetschungen und Beschädigungen des Leiterseiles entstehen können.

Durch die CH-A-477 773 ist eine Tragspiralenklemme der eingangs genannten Art bekanntgeworden, bei welcher durch einen Ringkörper zwischen Leiterseil und Tragspirale eine direkte Auflage zwischen diesen Teilen im Trag- bzw. Klemmbereich vermieden wird. Durch die Klemmung entstehen trotzdem Druckbeanspruchungen im Leiterseil.

Bei dynamischen Beanspruchungen des Leiterseiles bzw. Kabels, die durch vom Wind verursachte Schwingungen entstehen, treten im Leiterseil bzw. Kabel zusätzliche Wechselspannungen auf, die zu Ermüdungsbrüchen des Leiterseils bzw. Kabels führen können.

Aufgabe der vorliegenden Erfindung ist die Schaffung einer Tragspiralenklemme der eingangs genannten Art, bei welcher die durch Schwingungen im Aufhängebereich auftretenden Zusatzspannungen ohne weitere Massnahmen bzw. ohne einen höheren baulichen Aufwand reduziert werden.

Erfindungsgemäss wird dies durch die kennzeichnenden Merkmale von Anspruch 1 gelöst.

Besonders vorteilhafte Ausgestaltungen der Erfindung sind in den abhängigen Ansprüchen gekennzeichnet.

Durch den Einsatz eines Zentrierringes, der von der Tragspirale gehalten ist und sich nicht auf das Leiterseil abstützt, wird erreicht, dass das Leiterseil frei in dem Zentrierring angeordnet ist. Zusätzliche Schwingungsbeanspruchungen können somit nicht auftreten bzw. werden verringert. Die axial auftretenden Zugkräfte im Leiterseil werden über die beidseitig aufgewundenen Tragspiralen von der den Zentrierring und die Tragspirale umschliessenden Klemme aufgenommen.

Die Erfindung ist in den beiliegenden Zeichnungen beispielsweise dargestellt und nachfolgend beschrieben. Es zeigen :

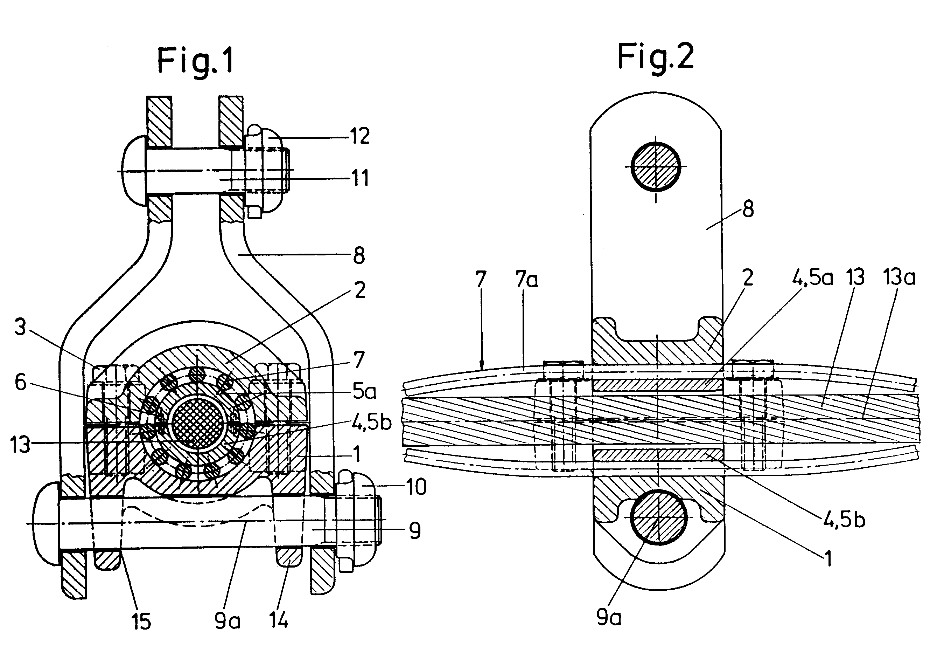

Fig. 1 einen Querschnitt durch die Tragspiralenklemme, und
Fig. 2. einen Längsschnitt durch die Tragspiralenklemme.

Die Tragspiralenklemme weist eine aus einem Klemmkörper 1 und einem Deckel 2 bestehende Klemme auf, wobei der Deckel mittels Schrauben 3 auf dem Klemmkörper 1 befestigt ist. Eine auf dem als Leiterseil 13 oder Kabel ausgebildeten, elektrischen Leiter angeordnete Tragspirale 7 ist im Aufhängebereich im Durchmesser aufgeweitet, wobei zwischen dem Leiterseil 13 und der Tragspirale 7 ein Zentrierring 4 angeordnet ist.

Der Zentrierring 4 besteht aus zwei Halbschalen 5a, 5b, welche mittels Stiften 6 in einer positionierten Lage zueinander gehalten werden. Der Innendurchmesser des Zentrierringes 4 ist etwas grösser als der Aussendurchmesser des Leitersseiles 13 bzw. des Kabels, so dass auch im verspannten Zustand des Klemmkörpers 1 mit dem Deckel 2 noch ein Spiel zwischen Leiterseil 13 und Zentrierring 4 vorhanden ist.

Am Klemmkörper 1 sind Flansche 14 mit Bohrungen 15 angeordnet. An einem in den Bohrungen 15 gelagerten Bolzen 9 mit einer Mutter 10 sind Laschen 8 einer Aufhängevorrichtung schwenkbar gelagert, wobei der Bolzen 9 und damit die Schwenkachse 9a unterhalb der Leiterachse 13a angeordnet ist.

Mittels eines weiteren, mit einer Mutter 12 versehenen Bolzens 11 sind die Laschen 8 und somit die gesamte Tragspiralenklemme an einem weiter nicht dargestellten Isolator oder einer anderen Einrichtung aufhängbar.

Bei einer weiter nicht dargestellten Ausführungsvariante Können die Laschen 8 an am Klemmkörper 1 im Bereiche der Leiterachse 13a angeformten Zapfen eingehängt werden.

Die Montage erfolgt wie nachfolgend beschrieben:
An der vorgesehenen Tragstelle des Leiterseiles 13 oder Kabels werden die beiden Halbschalen 5a und 5b über das Leiterseil 13 bzw. Kabel gelegt und mittels den Stiften 6 zu einem formstabilen Zentrierring 4 zusammengesteckt.

Danach werden über das Leiterseil 13 oder Kabel und den durch die Halbschalen 5a, 5b gebildeten Zentrierring 4 nacheinander die Spiralstäbe 7a der Tragspirale 7 in bekannter Weise zu einem ringförmigen Bündel gelegt. Dabei ist auf gleichmässige Längs- und Querverteilung der Spiralstäbe 7a zum Zentrierring 4 zu achten. Nun wird das Leiterseil 13 oder Kabel im Bereich des durch den Zentrierring 4 aufgeweiteten Spiralbündels in den Klemmkörper 1 gelegt. An dem Klemmkörper 1 mit dem darin liegenden Seil in der Tragspirale 7 werden nun die Laschen 8 mit dem Bolzen 9 und der Mutter 10 befestigt oder an den nicht dargestellten Zapfen, eingehängt und mit den Isolator oder einer anderen Einrichtung verbunden. Abschliessend wird auf die Tragspirale von oben der Deckel 2 aufgelegt und mit dem Klemmkörper 1 mit den Schrauben 3 verschraubt.

Vor dem endgültigen Festziehen der Schrauben 3 kann der Zentrierring 4 zur Korrektur des Aufhängepunktes noch etwas axial verschoben werden, um eine Schrägstellung der Laschen 8 zu vermeiden.

Im fertig montierten Zustand ist die Tragspirale 7 zwischen den Klemmteilen 1 und 2 und den Schalen 5 a und 5b des Zentrierringes 4 fest verklemmt. Somit wird das Leiterseil 13 oder Kabel von der nun radial und axial fixierten Tragspirale festgehalten. Da der Innendurchmesser des das Leiterseil umgebenden Zentrierringes leicht grösser ist als der Durchmesser des Leiters, ist gewährleistet, dass der Leiter oder das Kabel im Tragpunkt ohne Pressung oder Quetschung gehalten wird.

## Patentansprüche

1. Tragspiralenklemme für Leiterseile bei elektrischen Freileitungen mit einer an einer Aufhängevorrichtung angeordneten Klemme, welche eine Tragspirale und einen zweiteiligen Zentrierring umschliesst, dadurch gekennzeichnet, dass der Zentrierring (4) aus zwei Halbschalen (5a, 5b) besteht, welche mittels der Klemme (1, 2) bei gleichzeitiger Klemmung der Spiraldrähte (7a) der Tragspirale gegeneinander fest verspannbar sind, und dass zwischen dem Innendurchmesser des Zentrierringes (4) und dem Aussendurchmesser des Leiterseiles (13) ein Spiel vorhanden ist, wodurch das Leiterseil (13) frei ohne Pressung bzw. Quetschung im Zentrierring (4) von der Tragspirale (7) gehalten, angeordnet ist.

2. Tragspiralenklemme nach Anspruch 1, dadurch gekennzeichnet, dass die Halbschalen (5a, 5b) des Zentrierringes (4) aus einem festen, leitenden oder halbleitenden Material bestehen.

3. Tragspiralenklemme nach Anspruch 2, dadurch gekennzeichnet, dass die Halbschalen (5a, 5b) aus einem feuerverzinkten Stahl bestehen.

4. Tragspiralenklemme nach einem der Ansprüche 1 bis 3, dadurch gekennzeichnet, dass die Klemme einen Klemmkörper (1) und einen Deckel (2) aufweist, wobei der Deckel (2) mittels Schrauben (3) gegen den Klemmkörper (1) spannbar ist.

5. Tragspiralenklemme nach Anspruch 4, dadurch gekennzeichnet, dass die Aufhängevorrichtung (8) mittels eines unterhalb der Leiterachse (13a) angeordneten Bolzen (9) mit dem Klemmkörper (1) schwenkbar verbunden ist.

6. Tragspiralenklemme nach Anspruch 4, dadurch gekennzeichnet, dass die Aufhängevorrichtung (8) mit am Klemmkorper (1) im Bereich der Leiterachse (13a) angeordneten Zapfen schwenkbar verbunden ist.

7. Tragspiralenklemme nach einem der Anspruch 1 bis 6, dadurch gekennzeichnet, dass die beiden Halbschalen (5a, 5b) des Zentrierringes (4) zueinander mittels Zentriermitteln, vorzugsweise Stiften (6) positioniert sind.

## Claims

1. Holding spiral clamp for stranded conductors with open electrical lines with a clamp arranged on a suspension device, which clamp comprises a holding spiral and a two-part centering ring (4), characterised in that the centering ring (4) consists of two half-shells (5a,5b), which are braced firmly relative to each other by means of the clamp (1,2) with simultaneous clamping of the spiral wires (7a) of the holding spiral, and in that there is clearance between the inner diameter of the centering ring (4) and the outer diameter of the stranded conductor (13), by means of which the stranded conductor (13) is arranged, held freely without pressing or crushing in the centering ring (4) by the holding spiral (7).

2. Holding spiral clamp according to claim 1, characterised in that the half-shells (5a,5b) of the centering ring (4) consist of a firm, conducting or half-conducting material.

3. A holding spiral clamp according to claim 2, characterised in that the half-shells (5a,5b) consist of a hot-galvanized steel.

4. Holding spiral clamp according to one of claims 1 to 3, characterised in that the clamp has a clamping body (1) and a cover (2), wherein the cover (2) is clamped by means of screws (3) against the clamping body (1).

5. Holding spiral clamp according to claim 4, characterised in that the suspension device (8) is connected in a pivotable manner to the clamping body (1) by means of a bolt (9) arranged below the conductor axis (13a).

6. Holding spiral clamp according to claim 4, characterised in that the suspension arrangement (8) is connected in a pivotable manner to a pin arranged on the clamping body (1) in the region of the conductor axis (13a).

7. Holding spiral clamp according to one of claims 1 to 6, characterised in that the two half-shells (5a,5b) of the centering ring (4) are positioned relative to each other by means of centering means, preferably pins (6).

## Revendications

1. Pince pour faisceau de support en spirale pour des conducteurs électriques à l'air libre, comprenant une pince disposée sur un dispositif de suspension, la pince comprenant un faisceau de support en spirale et une bague de centrage en deux parties, caractérisé en ce que la bague de centrage (4) est composée de deux demi-coquilles (5a, 5b) qui sont susceptibles d'être serrées rigidement l'une sur l'autre au moyen de la pince (1, 2) par pincement simultané des fils spiralés (7a) du faisceau de support en spirale, et en ce qu'entre le diamètre intérieur de la bague de centrage (4) et le diamètre extérieur du câble conducteur (13), est prévu un jeu de sorte que le câble conducteur (13) soit maintenu par le faisceau de support en spirale (7) librement dans la bague de centrage (4), sans compression ou écrasement.

2. Pince pour faisceau de support en spirale selon la revendication 1, caractérisé en ce que les demi-coquilles (5a, 5b) de la bague de centrage (4) sont constituées d'un matériau rigide, conducteur ou semi-conducteur.

3. Pince pour faisceau de support en spirale selon la revendication 2, caractérisé en ce que les demi-coquilles (5a, 5b) sont réalisées en acier galvanisé à chaud.

4. Pince pour faisceau de support en spirale selon l'une des revendications 1 à 3, caractérisé en ce que la pince comporte un corps de serrage (1) et un couvercle (2), le couvercle (2) étant susceptible d'être serré contre le corps de serrage au moyen de vis (3).

5. Pince pour faisceau de support en spirale selon la revendication 4, caractérisé en ce que le dispositif de support (8) est raccordé, en étant susceptible de pivoter, au corps de serrage (1) au moyen d'un boulon (9) disposé endessous de l'axe du conducteur (13a).

6. Pince pour faisceau de support en spirale selon la revendication 4, caractérisé en ce que le dispositif de suspension (8) est relié, en étant susceptible de pivoter, au corps de serrage (1) à l'aide de tourillons disposés à proximité de l'axe du conducteur (13a).

7. Pince pour faisceau de support en spirale selon l'une des revendications 1 à 6, caractérisé en ce que les deux demi-coquilles (5a, 5b) de la bague de centrage (4) sont positionnées l'une par rapport à l'autre à l'aide de moyens de centrage, de préférence des broches (6).
